(19) Europäisches Patentamt

European Patent Office

Office européen des brevets

(11) **EP 1 206 773 B1**

(12) **FASCICULE DE BREVET EUROPEEN**

(45) Date de publication et mention
de la délivrance du brevet:
**25.06.2003 Bulletin 2003/26**

(21) Numéro de dépôt: **00958672.8**

(22) Date de dépôt: **11.08.2000**

(51) Int Cl.⁷: **G11B 11/105**

(86) Numéro de dépôt international:
**PCT/FR00/02306**

(87) Numéro de publication internationale:
**WO 01/015155 (01.03.2001 Gazette 2001/09)**

(54) **TETE DE LECTURE ANTI-ABRASION**

ABRIEBFESTER LESEKOPF

ANTI-ABRASIVE READING HEAD

(84) Etats contractants désignés:
**DE FR GB**

(30) Priorité: **20.08.1999 FR 9910671**

(43) Date de publication de la demande:
**22.05.2002 Bulletin 2002/21**

(73) Titulaire: **Thales**
**75008 Paris (FR)**

(72) Inventeur: **JACQUET, Jean-Claude**
**Thomson-CSF IPD**
**94117 Arcueil,Cedex (FR)**

(74) Mandataire: **Chaverneff, Vladimir**
**THALES Intellectual Property,**
**13, avenue du Président S. Allende**
**94117 Arcueil Cédex (FR)**

(56) Documents cités:
**EP-A- 0 436 424        EP-A- 0 527 670**

**Description**

La présente invention se rapporte à une tête de lecture magnéto-optique.

Pour la lecture de support magnétique, un type connu de têtes magnéto-optiques met en oeuvre un effet Faraday et/ou un effet Kerr. Ces effets consistent à magnétiser un matériau magnéto-optique, tel que du grenat, par le flux magnétique produit par le support magnétique, et à détecter cette magnétisation grâce au pouvoir rotatoire qu'elle a sur une lumière polarisée.

Le principe physique exploité est l'effet magnéto-optique, connu sous le nom de rotation Kerr ou de rotation Faraday. Dans cet effet, une onde électromagnétique se réfléchissant sur un milieu magnéto-optique ou le traversant, subit une modification de son état de polarisation. Cet état dépend de la direction de l'aimantation du milieu. Le pôle de lecture étant constitué d'un tel matériau, un faisceau laser s'y réfléchissant voit sa polarisation modulée par les variations d'aimantations induitent par le support magnétique. Cette modulation est ensuite transformée en variations d'intensité lumineuse qui sont alors mesurées à l'aide d'un photodétecteur permettant ainsi de remonter à l'information inscrite sur le support magnétique. L'information magnétique n'est donc plus véhiculée par un courant électrique mais par une onde électromagnétique.

Une telle tête de lecture a été décrite dans le brevet français n° 2 656 723. La figure 1 représente le schéma simplifié d'un mode de réalisation de cette tête.

Elle comporte une couche 9 de matériau magnétique à bonne perméabilité magnétique, d'une épaisseur pouvant atteindre plusieurs microns par exemple.

Sur la couche 9 sont formées une couche 10 de matériau non magnétique, d'une épaisseur comprise, par exemple entre 50 et 3 000 nm, et typiquement de 300 nm environ, et une couche mince 11 de matériau magnétique formant la couche à effet magnéto-optique (effet Kerr par exemple). L'épaisseur de la couche 11 est par exemple comprise entre 10 et 200 nm environ. Un faisceau optique incident oblique 12 arrive sur la couche 11, qui réfléchit un faisceau 13. Les couches 9 à 11 sont polies sur un de leurs chants, par exemple perpendiculairement à leur surface principale, et la bande magnétique à lire 14 est appliquée sur la surface ainsi polie.

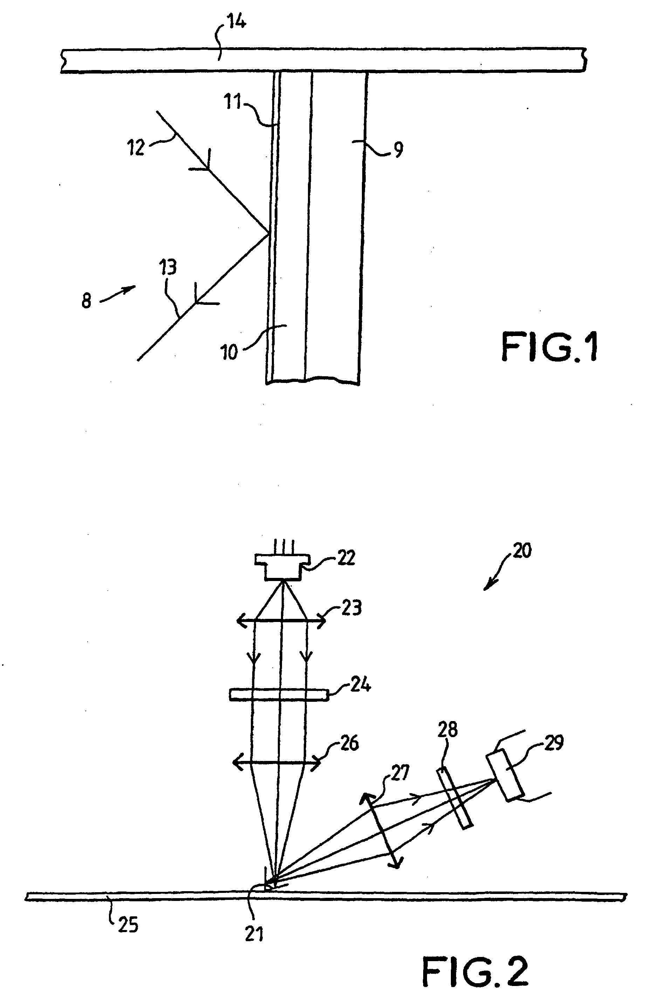

La tête de la figure 1 peut être facilement réalisée en une seule opération de dépôt de couches, et il n'est pas absolument nécessaire de graver les couches déposées, pour réaliser des têtes de lecture multipistes.

On a représenté en figure 2 un système 20 de lecture magnéto-optique multipiste comportant une tête de lecture conforme à l'invention. L'intérêt principal, pour la lecture d'un enregistrement multipiste, de l'utilisation d'une tête à effet Kerr est dû au principe de la lecture active dont les performances ne sont pas handicapées par une faible vitesse de défilement de la bande à lire. Le système 20 comporte en amont de la tête 21 à effet Kerr une source ponctuelle de lumière 22, de préférence une diode laser, un objectif de collimation 23, un dispositif 24 comprenant un polariseur servant à rendre la polarisation du faisceau lumineux la traversant perpendiculaire à la direction de défilement de la bande 25 à lire, et une lentille cylindrique 26 orientée de façon à focaliser le faisceau collimaté par l'objectif 23 selon une ligne perpendiculaire à la direction de défilement de la bande 25.

La tête 21 comprend, comme exposé dans la présente description, un capteur à effet Kerr et, le cas échéant, un réflecteur optique.

En aval de la tête 21, le système 20 comporte un dispositif optique 27 d'imagerie ; un dispositif 28 comprenant un analyseur et le cas échéant un compensateur de phase ; et un capteur optique linéaire 29 dont la zone active est la conjuguée optique par le système optique, de la ligne éclairée sur la tête à effet Kerr. Ce capteur optique comporte par exemple une barrette CCD. Le grandissement de la partie aval du système 20 étant typiquement de l'ordre de l'unité, on peut avantageusement le réaliser en optique intégrée.

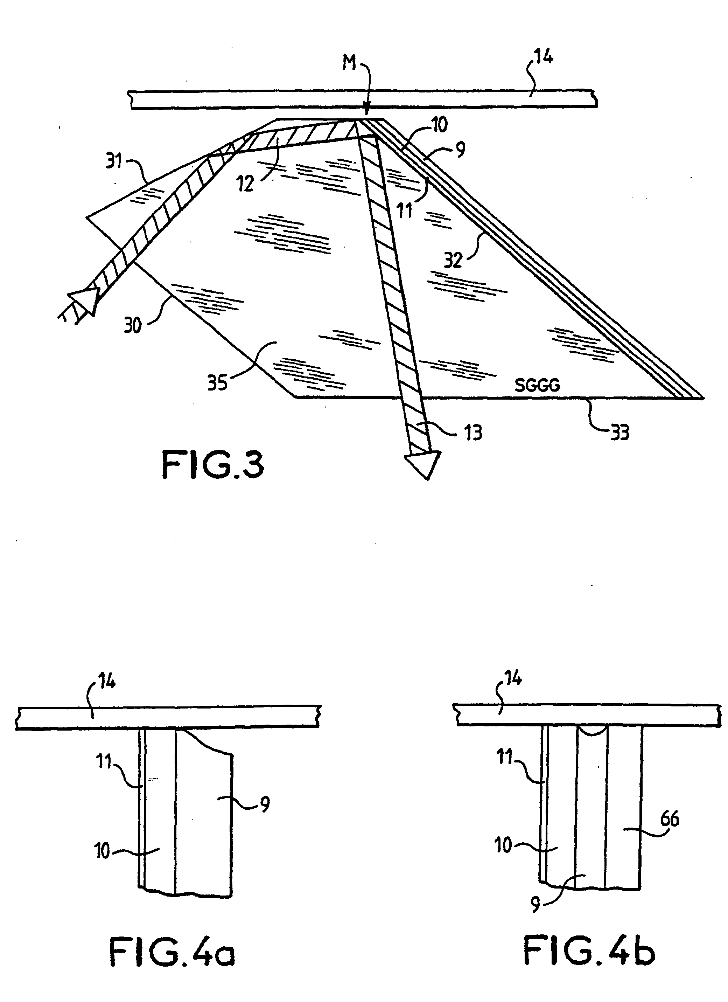

La figure 3 représente un mode de réalisation d'une tête de lecture magnéto-optique selon l'invention dans lequel les différentes couches de la figure 1 sont réalisées sur un prisme 35 en matériau transparent à la longueur d'onde du faisceau de lecture. Ce matériau est par exemple en SGGG (Grenat de Galidonium et Gallium). Les différentes faces 30 à 33 de ce prisme sont orientées de façon que le faisceau de lecture 12 pénètre sans réflexion dans le prisme et soit réfléchi sur la face 32 portant la couche magnéto-optique 11 de la tête, à proximité de la zone de lecture de la bande magnétique 14 à lire. La face de sortie 33 est orientée de façon que le faisceau 13 sorte sans réflexion du prisme. Il est à noter que les faces 30 et 33 peuvent être revêtues d'une couche de matériau antireflet en $SiO_2$ par exemple.

Les couches 9, 10, 11 correspondent aux couches portant les mêmes références sur la figure 1 sont réalisées sur la face 32 du prisme.

Dans ce type de têtes magnétiques connues, la couche magnéto-optique 11 est en Sendust ($Fe_xSi_yAl_z$), la couche d'entrefer 10 est en $Si_3N_4$ ou $Al_2O_3$ et la couche magnétique 9 est en Sendust.

A titre d'exemple, une tête de lecture magnéto-optique peut être actuellement constituée de l'empilement des matériaux suivants :

■ une couche 11 de Sendust, d'une épaisseur de 30 nm et qui sert de pôle de lecture,

■ une couche de Nitrure de Silicium de 180 nm d'épaisseur,
■ une couche de Cuivre de 50 nm d'épaisseur

ces deux couches servant de couche d'entrefer magnétique et optique 10.

■ une couche 9 de Sendust de 1 μm d'épaisseur permettant de fermer le flux et jouant un rôle de blindage magnétique,
■ une couche d'alumine ou de $Si_3N_4$ ou de tout autre matériau dur non magnétique de 2 μm d'épaisseur peut être prévue pour servir de protection de l'ensemble.

Le tout est déposé sur un substrat de Grenat.

Ces matériaux de nature très différente ont tous des propriétés mécaniques différentes. Ainsi, nous avons une association de matériaux durs (Grenat, $Si_3N_4$, $Al_2O_3$) et de matériaux tendre (Sendust, Cuivre). Cette constitution de matériaux de duretés très différentes est extrêmement pénalisante en terme de durée de vie du composant. En effet, au contact de la bande, nous observons un phénomène d'usure différentielle entre les matériaux durs et doux avec l'apparition d'une récession de l'ordre de 100 nm des matériaux les moins durs, celle-ci étant essentiellement localisée sur la couche 9 (voir figure 4a). Cette usure est représentée sur les figures 4a et 4b. Dans le cas où la couche 9 est recouverte d'une couche 10b de dureté supérieure à celle de la couche 9, on peut avoir une usure telle que représentée en figure 4b. Cette usure peut être sensible au bout de quelques centaines d'heures d'utilisation seulement, alors que l'on désire avoir de 5 000 à 30 000 heures de fonctionnement selon l'application visée. Cette récession se traduit par une perte de signal d'environ 6 dB à 1μm de longueur d'onde magnétique suite à l'espacement créé et à la perte de résolution, la tête passant progressivement d'un fonctionnement dipolaire où la résolution est déterminée par la largeur du gap à un fonctionnement monopolaire où la résolution est alors déterminée par l'extension de la zone active du pôle de lecture.

Il est alors impossible de récupérer le signal, la partie en contact étant irrémédiablement détériorée et seul un refaçonnage du méplat permettrait de récupérer ce signal.

Dans les têtes de lecture/écriture magnétorésistives, les solutions actuelles proposent de déposer une couche d'un matériau dur sur le devant de la tête. Cependant, cette solution est contraignante et coûteuse en terme de réalisation technologique (les matériaux durs difficiles à réaliser), et génère des pertes d'espacement de l'ordre de 3 à 4 dB à 1μm (pour 60 nm déposés).

L'invention vise à résoudre ce problème d'usure.

L'invention concerne donc une tête de lecture magnéto-optique, caractérisée par le fait qu'elle comporte un transducteur magnéto-optique à structure multicouches à au moins une couche magnétique mince à effet magnéto-optique, au moins une couche en matériau non magnétique et présentant un coefficient d'usure déterminé et une couche à bonne perméabilité magnétique de fermeture de circuit magnétique, et caractérisée en ce que la couche à bonne perméabilité magnétique comprend une alternance de premières sous-couches en matériau magnétique à bonne perméabilité magnétique et de deuxièmes sous-couches en matériau présentant un coefficient d'usure sensiblement équivalent audit coefficient d'usure de la couche en matériau non magnétique.

Les différents objets et caractéristiques de l'invention apparaîtront plus clairement dans la description qui va suivre fournie à titre d'exemple et dans les figures annexées qui représentent :

• les figures 1 à 4, des têtes de lecture magnéto-optiques selon l'art connu et décrites précédemment ;
• la figure 5, un exemple simplifié de tête de lecture magnéto-optique selon l'invention ;
• la figure 6, un exemple de réalisation des différentes couches de la tête de lecture de la figure 5 ;
• les figures 7a et 7b, un exemple plus complet d'une tête de lecture selon l'invention ;
• les figures 8 à 11, un mode de réalisation de la tête de lecture permettant de symétriser la structure de la tête.

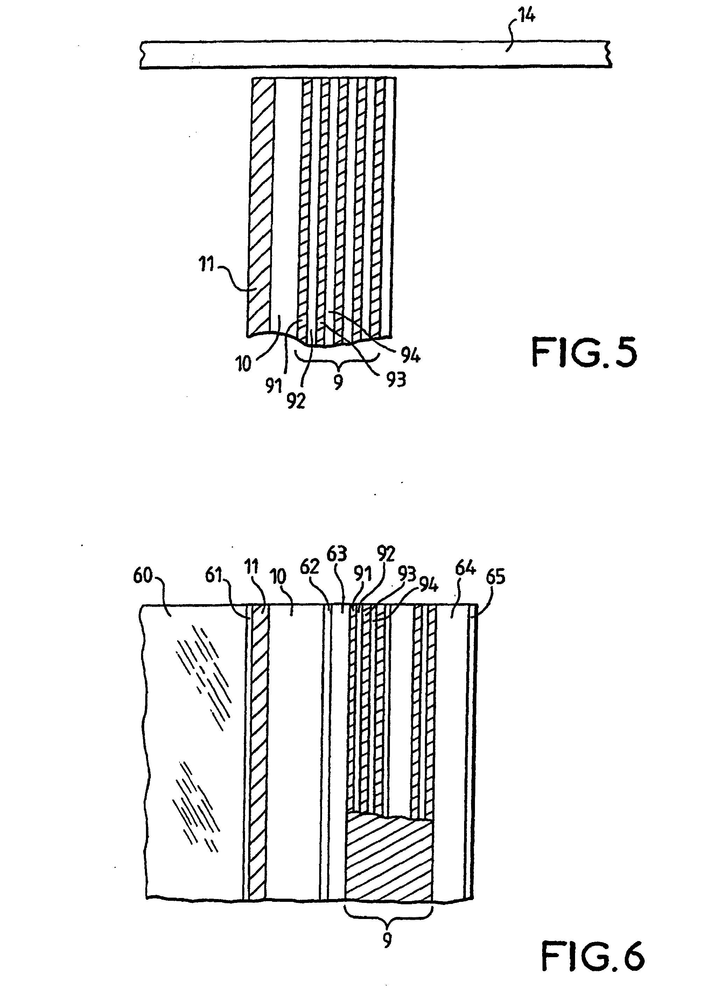

En se reportant à la figure 5, on va donc tout d'abord décrire un exemple simplifié d'une tête de lecture magnéto-optique selon l'invention.

Cette tête de lecture comporte, comme décrit précédemment, une couche 11 en matériau présentant des propriétés magnéto-optique (effet Kerr et/ou effet Faraday), une couche d'entrefer 10 en matériau non magnétique, une couche 90 en matériau magnétique ayant bonne perméabilité magnétique pour permettre au flux magnétique induit par le support magnétique 14 de circuler et de se refermer par les couches 11 et 9.

Selon l'invention, la couche 9 est constituée par un empilement de sous-couches (telles que 91, 93) en matériau à bonne perméabilité magnétique alternées avec des sous-couches (telles que 92, 94) ayant un coefficient d'usure sensiblement équivalent à celui de la couche d'entrefer 10. De préférence, ce coefficient d'usure est faible.

De préférence, les sous-couches en matériau à bonne perméabilité magnétique sont en un matériau similaire à celui de la couche 11. Les sous-couches en matériau à coefficient d'usure équivalent à celui de la couche 10 sont en matériau similaire à celui de la couche d'entrefer 10.

De cette façon, les couches 9 et 10 s'useront de façon uniforme et le phénomène d'usure de la figure 4 ne se produira pas.

La figure 6 représente un exemple de réalisation d'une telle tête de lecture. Selon cet exemple, la couche 11 est en Sendust ($Fe_xSi_yAl_z$) d'épaisseur environ 25 nm, la couche d'entrefer 10 est en nitrure de Silicium ($Si_xN_y$) d'épaisseur environ 200 nm et la couche 9 est une alternance de couches de Sendust de 30 nm d'épaisseur et de couches de Nitrure de Silicium d'épaisseur 20 nm. Par exemple, la couche 9 peut être constituée d'une trentaine de couches de Sendust et d'une trentaine de couches de Nitrure de Silicium.

On voit donc, que selon l'invention, pour réduire les problèmes de rétreint du deuxième pôle (couche 9), nous partons de la constatation que la valeur de celui-ci dépend de l'épaisseur du matériau magnétique, le rétreint diminuant lorsque l'épaisseur diminue. Ainsi plus l'épaisseur du matériau en contact avec la bande sera faible, plus l'usure de ce matériau sera réduite. Cela explique pourquoi la couche 11 est beaucoup moins affectée par ce phénomène, son épaisseur 20 nm (devant 1.5 μm) étant inférieure à la taille moyenne des particules abrasives et joue le rôle de filtre par rapport aux particules abrasives transportées par la bande. Nous proposons donc de réaliser le second pôle en alternant un matériau de dureté comparable avec le substrat (tel que le $Si_3N_4$ par exemple), avec des couches magnétiques d'épaisseur x suffisamment faibles pour réduire suffisamment cette usure différentielle à un niveau acceptable. Nous réalisons ainsi, à l'échelle des phénomènes abrasifs, un matériau magnétique, mécaniquement dur. Le nombre de périodes n étant défini de telle manière que le produit n x soit égal à l'épaisseur de matériaux magnétiques nécessaires pour que le deuxième pôle puisse continuer de remplir son rôle de fermeture du flux et de blindage magnétique.

Le choix des matériaux n'est pas limitatif (au lieu de $Fe_xSi_yAl_z$ notamment, cela pourrait être du $Fe_xTa_yN_z$ ou tout autre matériau magnétique).

Dans ces conditions, l'invention prévoit que préférentiellement l'épaisseur du matériau le plus mou (Sendust) est inférieure à la taille moyenne des particules abrasives due aux aspérités de la bande et aux poussières générées par celle-ci. La dureté du matériau ainsi réalisée sera celle du matériau le plus dur. Seuls les grains de taille inférieure à cette épaisseur pourront arracher de la matière au matériau mou. Au plus, la profondeur qui sera creusée sera de l'ordre de cette épaisseur.

Les différentes épaisseurs s et n à donner aux deux matériaux de la couche 9 (Sendust et $Si_3N_4$) sera le compromis qui permettra de réduire suffisamment le rétreint sur la couche 9 sans altérer les propriétés magnétiques requises pour la couche 9 et qui permettra un fonctionnement correct du système.

Celle-ci possédera alors simultanément de bonnes propriétés magnétiques (forte aimantation à saturation, faible champ coercitif, anisotropie bien contrôlée ...) et une dureté ou résistance à l'abrasion supérieure à celle du matériau magnétique de base. Nous combinons de cette manière les propriétés mécanique de dureté du $Si_3N_4$ et celle magnétique du Sendust et réalisons un matériau dont la résistance aux phénomènes d'abrasion peut être calée en jouant sur les épaisseurs relatives des deux matériaux en présence (jusqu'à 5 nm possibles pour le matériau magnétique).

De plus, comme cela est représenté sur la figure 6, la tête de lecture peut présenter des caractéristiques supplémentaires.

Notamment, la couche magnéto-optique 11 peut être réalisée sur un substrat 60 en SGGG avec une couche adhésive intermédiaire 61. De plus une couche réflectrice 63 peut être prévue entre la couche d'entrefer 10 et l'ensemble 9 de l'alternance de couches, toute la lumière du faisceau de lecture n'étant pas réfléchie par la couche 11. Cette couche réflectrice a pour objet d'augmenter la réflexion de la fraction du faisceau ayant traversé ce pôle de lecture. L'indice de la couche d'entrefer est choisi de manière à ce que les faisceaux réfléchis se superposent en étant en phase.

Enfin, une couche de protection de quelques micromètres d'épaisseur 64 en Nitrure de Silicium est prévue sur l'empilement de couche 9.

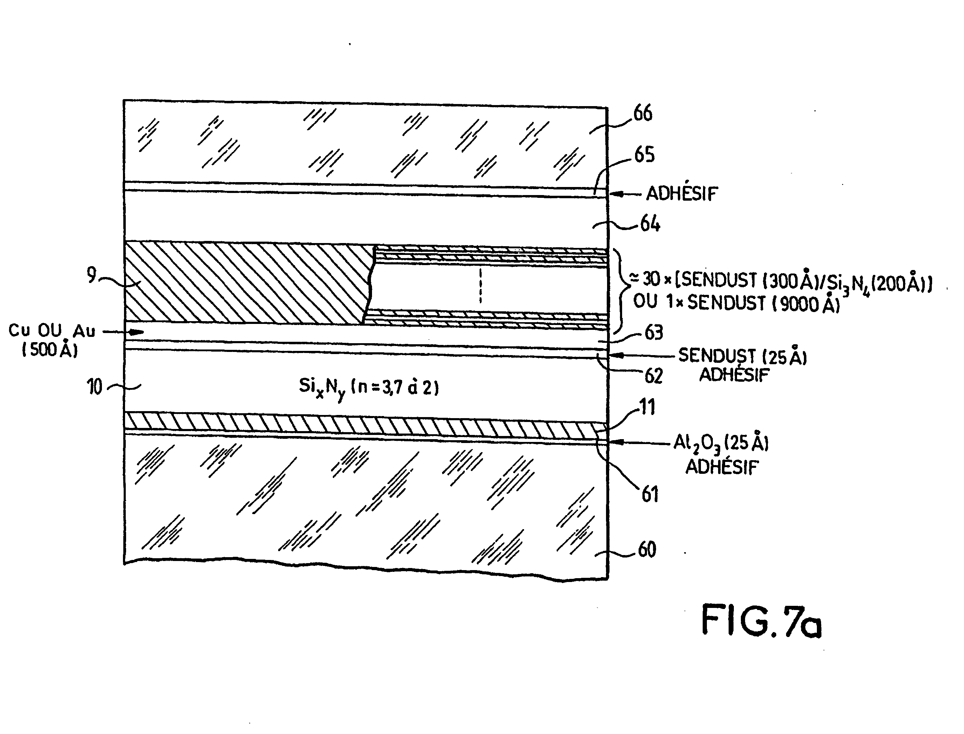

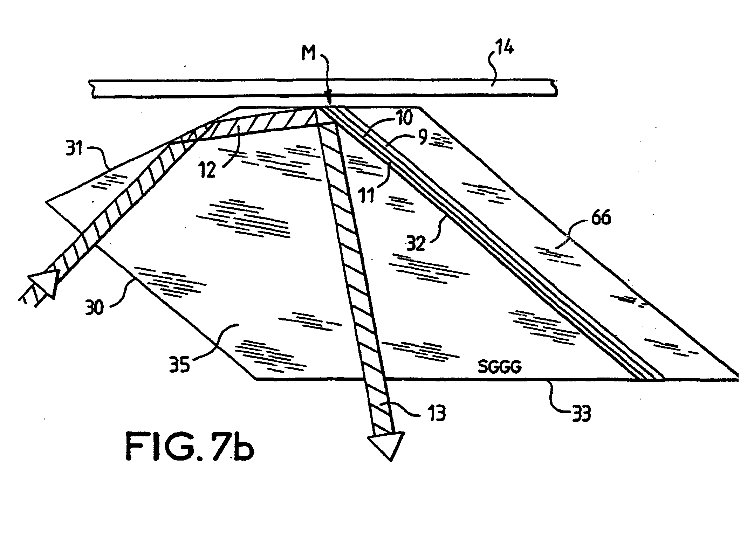

A titre d'exemple, un mode de réalisation détaillé correspondant à la figure 7 permet d'obtenir une tête de lecture dont les différentes couches présentent les caractéristiques suivantes :

- Substrat 60 : en GGG
- Couche adhésive 61 : en $Al_2O_3$, épaisseur 2,5 nm
- Couche magnéto-optique 11 : en Sendust, épaisseur 25 nm
- Couche d'entrefer 10 : en $Si_xN_y$, d'indice n compris entre 2 et 3,5 et d'épaisseur 200 nm
- Couche adhésive 62 : en Sendust, d'épaisseur 2,5 nm
- Couche réflectrice 63 : en Cuivre ou en Or, d'épaisseur 50 nm
- Couche magnétique 9 : empilement de quelques dizaines (30 par exemple) de couches de Sendust (épaisseur comprise entre 10 et 50 nm, par exemple 30 nm) alternées avec quelques dizaines (30 par exemple) de couches de $Si_xN_y$ de quelques dizaines de nm, 20 nm par exemple

- Couche de protection 64 en $Si_xN_y$ d'épaisseur quelques µm (1 à 5).

Nous allons maintenant décrire un exemple de procédé de fabrication d'une telle tête de lecture. Ce procédé comprend les trois phases principales suivantes :

- le dépôt des différentes couches magnétiques, diélectriques et réflectrices, qui permettent la réalisation de la tête magnétique et de la structure optique résonnante Fabry-Pérot ;
- le dépôt de la couche de protection $Si_3N_4$ de quelques µm d'épaisseur (1 à 5) qui est suivi du recuit sous champs magnétique des couches ;
- la découpe, le polissage et les traitements antireflet et protecteurs des différentes faces du prisme constituant le composant.

Dans la technologie actuelle toutes les couches sont déposées par pulvérisation cathodique dans un bâti dont la pression du vide est de l'ordre de quelques dizaines de nanoTorr. Ce bâti permet de réaliser des dépôts en DC et en RF, en magnétron et en diode, ces dépôts pouvant être réalisés sous champ magnétique. Les cibles ont un diamètre de 100 mm et la distance de dépôt est de 15 cm ce qui permet de déposer des couches dont l'épaisseur a une homogénéité de l'ordre de 2 à 3 % sur des wafers de 2 pouces de diamètres.

Le choix du substrat sur lequel sont réalisés les dépôts est important. Sa position d'interface optique (couplage de lumière dans le pôle de lecture) et mécanique (contact avec la bande) ainsi que le rôle de radiateur qu'il doit assurer (évacuation de la chaleur déposée par la source laser) imposent un certain nombre de contraintes sur ses propriétés physiques. Ces contraintes sont :

- transmettre un maximum de lumière vers le pôle de lecture et vers le photodétecteur donc être transparent à la longueur d'onde du laser utilisé ;
- ne pas modifier l'état de polarisation de l'onde électromagnétique lors de la traversée du substrat donc être faiblement biréfringent ;
- évacuer efficacement la chaleur résultant de l'absorption par le milieu magnéto-optique de l'onde électromagnétique incidente et qui dégradent les propriétés magnétiques de la couche de lecture donc être un bon conducteur de la chaleur ;
- éviter une usure trop rapide du méplat donc être suffisamment dur ;
- être facilement usinable et présenter une résistance mécano-chimique compatible avec les conditions d'utilisation du système.

L'ensemble de ces contraintes peut conduire à choisir un substrat réalisé dans un monocristal de la famille des grenats, par exemple un grenat de formule générique $Gd_3Ga_5O_{12}$.

Les dépôts sont réalisés sur des substrats dont les deux faces sont déjà polies. Ces faces ont une rugosité de l'ordre de 5 Å. Les substrats font 2 pouces de diamètre et ont une épaisseur de 3 mm. Il existe également des substrats de 3 pouces de diamètre qui possèdent les mêmes caractéristiques physiques, surtout en ce qui concerne l'homogénéité des propriétés optiques.

Avant de réaliser la séquence de dépôt, il convient de nettoyer le substrat. Les différentes étapes de nettoyage sont les suivantes :

Le substrat est plongé dans trois bains successifs de trichloréthylène, d'acétone et de propanol. Chacun de ces bains dure 3 minutes. Les bains sont à une température de 60°C et sont agités par ultrasons. Après ce nettoyage mécano-chimique, le substrat est introduit dans le bâti de dépôt. A l'intérieur du bâti, avant de débuter le dépôt des couches, nous réalisons un ultime nettoyage par etching plasma. Nous pouvons alors lancer la séquence de dépôt des différentes couches constituant l'empilement.

Le procédé de dépôt commence par le dépôt d'une couche d'alumine de 2,5 nm d'épaisseur. Le rôle de cette couche est d'assurer l'adhérence sur le substrat de la couche suivante.

On dépose alors le premier pôle magnétique (couche 11) appelé pôle de lecture et sur lequel se réfléchit le faisceau laser. Le matériau utilisé pour réaliser cette couche est le Sendust, son épaisseur est de 25 nm. La fonction de cette couche est double, elle doit d'une part, capter efficacement le champ magnétique généré par la bande, d'autre part, convertir le plus efficacement possible les variations d'aimantations en variations de polarisations. Cette couche doit donc posséder des propriétés magnétiques correctes et avoir un coefficient magnéto-optique le plus élevé possible. Les conditions de dépôt ainsi que la composition chimique du matériau ont donc été adaptées pour répondre à ces exigences.

On réalise ensuite le dépôt d'une couche diélectrique et d'une couche réflectrice de Cuivre ou d'Or. La fonction de cet ensemble de couches est également double. Il doit non seulement servir de gap magnétique mais aussi de structure otique résonnante Fabry-Perot, le rôle de cette structure étant d'améliorer le couplage de l'onde incidente avec la couche magnéto-optique et de récupérer la rotation Faraday générée lors de la traversée de cette couche par l'onde électromagnétique. Ainsi, les caractéristiques physiques et géométriques de ces deux couches définissent la densité de lecture et la qualité de la résonance. Un choix judicieux des indices et des épaisseurs des différentes couches permet de régler ces deux paramètres de manière optimale. Dans le cas d'une tête devant relire des bits de 0.4 micron, pour une onde laser de 780 manomètres et à 45° d'incidence, la couche diélectrique doit avoir une épaisseur de 1 900 Å et un indice de réfraction proche de 2, le réflecteur pouvant être une couche de Cuivre ou d'Or de 500 Å d'épaisseur. La couche diélectrique est réalisée à partir d'une cible de Silicium, le dépôt étant fait en présence d'un mélange d'Azote et d'Argon. Nous obtenons ainsi un composé proche du Nitrure de Silicium, dont les proportions de Silicium et d'Azote dépendent essentiellement de la concentration en Azote.

Vient ensuite le dépôt du deuxième pôle (couche 9) permettant de fermer le flux et faisant également office de blindage magnétique. Le matériau utilisé est le même que celui du pôle de lecture et ce en raison de ses propriétés magnétiques.

Ce deuxième pôle est constitué d'un empilement de 30 périodes de 30 nm de Sendust et de 20 nm de Nitrure de Silicium. Cette structure bien qu'augmentant le temps de dépôt permet de réduire le rétreint de ce pôle lors du passage de la bande. Ce deuxième pôle 9 est donc réalisé en un matériau artificiel combinant les propriétés magnétiques du Sendust et celles de résistance à l'abrasion du Nitrure de Silicium.

Ensuite, on dépose une couche de $Si_3N_4$ de quelques micromètres d'épaisseur environ dont le rôle est de protéger l'ensemble des dépôts. Le tout est ensuite introduit dans un four de recuit sous champ magnétique permettant d'améliorer les propriétés magnétiques du composant (diminution du champ coercitif et induction d'une anisotropie magnétique dan les pôles de lecture et de fermeture du flux.

Viennent ensuite les différentes étapes de découpe et de polissage des prismes. Nous commençons par découper le substrat en barrettes de 5 mm de large puis nous procédons aux polissages des différentes faces B, D correspondant respectivement aux faces de sortie et de réflexion totale du faisceau puis nous réalisons le méplat M par un polissage sur bandes abrasives.

Les figures 7a, 7b représentent une variante de réalisation de l'invention dans laquelle une contre-plaque 66 est prévue pour assurer un contact correct des couches de lecture (9, 10, 11) avec la bande. Cette contre-plaque peut être collée à la couche magnétique 11 ou à la couche de protection 10b.

On obtient ainsi un empilement de couches tel que représenté en figure 7a qui permet de réaliser, par exemple, la tête de lecture de la figure 7b.

Le rôle de cette contre-plaque qui peut être considéré comme un deuxième substrat est d'une part d'augmenter la largeur du méplat en contact avec la bande, d'autre part de localiser les couches 9, 10, 11 de la tête au centre de la face active (méplat M), réduisant la vitesse d'usure du méplat M et simplifiant le positionnement et le maintien de la tête sur le média comme cela sera expliqué ci-après.

Nous allons donc maintenant expliquer la fonction de la contre-plaque 66.

Cette contre-plaque permet de réaliser une géométrie du méplat permettant d'améliorer le contact et le réglage de la tête sur la bande magnétique et de réduire considérablement les contraintes de fabrication pesant sur les tolérances de la partie de la tête de lecture en contact avec la bande.

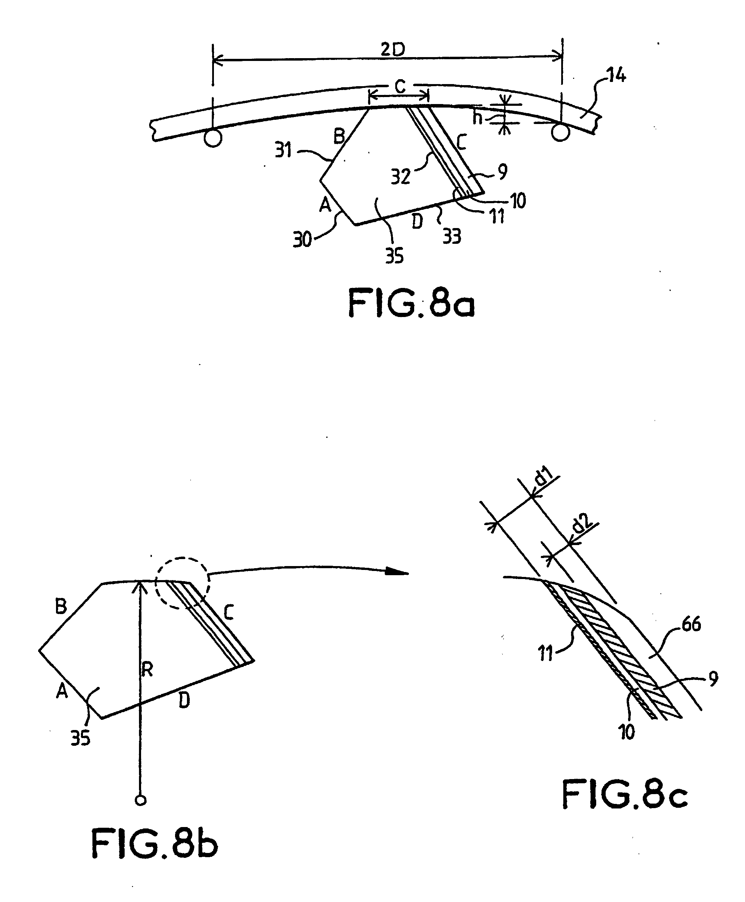

Dans les têtes actuelles, les éléments et paramètres principaux caractérisant le contact de la tête avec la bande magnétique sont les suivants (figures 8a à 8c) :

Pour le système :

- l'angle de wrap a, de l'ordre de 0.5°,
- la distance 2D séparant les guides, de l'ordre de 10 mm,
- l'enfoncement h de la tête dans la bande, de l'ordre de 50 $\mu$m,
- la tension T de la bande.

Pour le méplat :

- la largeur C, de l'ordre de 100 $\mu$m,
- le rayon de courbure R de l'ordre de 5 mm,
- sa composition, celui étant constitué de matériaux d'épaisseur et de dureté différentes,
- la position de la zone active de la tête sur le méplat, les pôles de blindage/fermeture du flux et de lecture se trouvant respectivement à des distances d2 et d1 de 3 et à 5 $\mu$m du bord du méplat.

Ses différents paramètres ne sont pas indépendants et sont reliés par les relations suivantes :

$$h = D\,a$$

$$C = 2 R a$$

Compte tenu des contraintes liées à l'encombrement du système (paramètre D), à la réalisation du méplat (paramètres R et C) et à la qualité du contact (paramètres a et h), les valeurs données ci-dessus sont un bon compromis (D, a et h).

Cependant cette géométrie présente les inconvénients majeurs suivants :

- concernant le contact :

Un des premiers problèmes est lié au fait que les couches magnétiques se trouvent à l'extrémité (figure 1c) du méplat. Ce dispositif rend critique le positionnement de la tête sur la bande (paramètres h, D et w) et impose de fortes tolérances sur la fabrication du méplat (paramètres R et C).

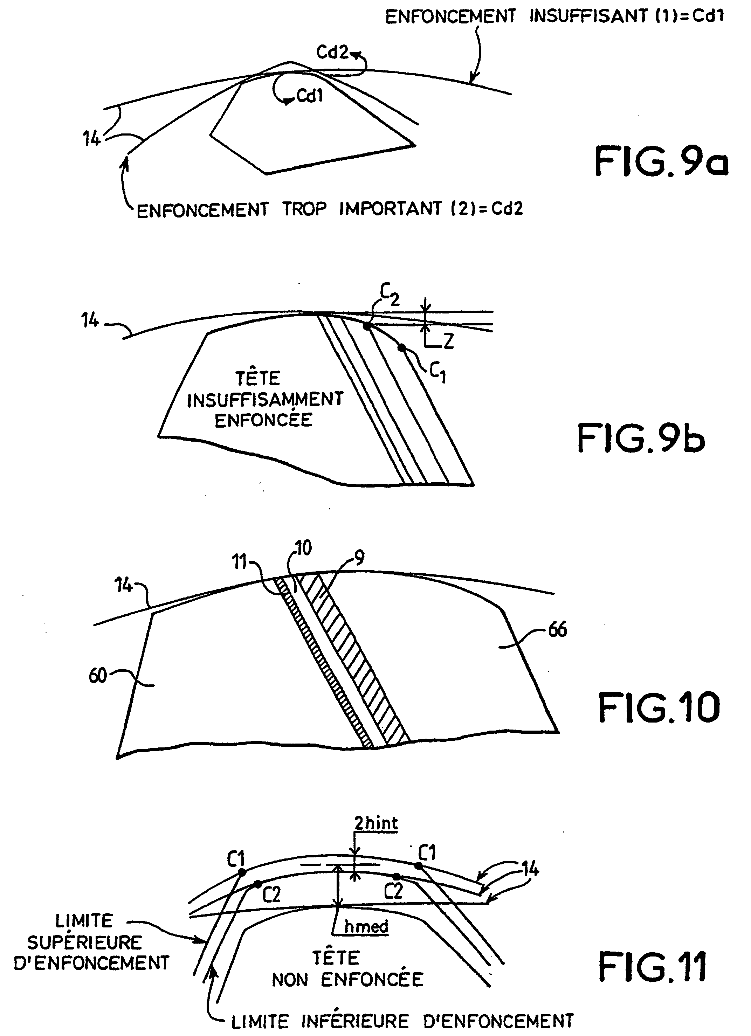

Evaluons ces contraintes. Calculons dans un premier temps, l'intervalle de valeur dans lequel doit se situer l'enfoncement h de la tête dans la bande pour qu'il y ait contact. Sur les figures 9a-9b, nous voyons que si l'enfoncement h est insuffisant, il n'y aura pas contact avec la zone active à l'opposé si celui-ci est trop important la bande sera en porte-à-faux sur les bords du méplat, la pression exercée alors par la bande sera beaucoup plus forte dans la zone de contact ce qui entraînera une usure accélérée de la portion du méplat en contact avec la bande. Ainsi, le dernier point de contact Cd, Cd1 et Cd2 entre la bande et le méplat doit être compris entre les points C1 et C2, cela définit deux largeurs de contact de la bande avec le méplat soit C et C-2 d2. L'enfoncement h associé à cet intervalle se calcule aisément à l'aide des formules précédentes et nous obtenons :

$$h = CD/2R \ (1-d2/C) \pm Dd2/2R = hmed \pm hint$$

hmed est la valeur nominale de l'enfoncement, hint est la marge de réglage sur cet enfoncement et doit être inférieure aux incertitudes de réglage et de fabrication. Evaluons ces différentes incertitudes.

- incertitude de fabrication du méplat :

$$hfab = CD/2R \ (Ri/R+Ci/C)$$

- incertitude de positionnement de la tête :

- latéralement : hlat : CD/2R Di/D
- angulairement : hang = D wi
- en enfoncement : hiz

soit : hpos = CD/2R Di/D + hiz + D wi

Nous obtenons donc la relation suivante :

$$CD/2R \ Di/D + hiz + D \ wi + CD/2R \ (Ri/R+Ci/C)<Dd2/2R$$

avec les données précédentes nous obtenons hint = 1.5 µm

Si nous supposons que nous sommes capables de garantir des côtes à 1 % près pour le méplat (ce qui correspond à une tolérance de 50 µm sur le rayon de courbure et de 1 µm sur la largeur), nous obtenons une valeur pour hfab de 1 µm, cela entraîne qu'il faille garantir le positionnement de la tête à 0.5 µm, ce qui extrêmement difficile à obtenir. En pratique on tolère qu'il y ait un espacement z entre la tête et la bande. Cet espacement introduire une perte p du signal dont l'expression en dB est :

$$p = 55 \ z/lm = 55 \ d^2/R/lm \ soit \ d = V(p \ R \ lm/55)$$

où d est la distance du dernier point de la bande en contact avec le méplat, lm la longueur d'onde magnétique du signal à lire, les valeurs étant données en micron.

Si nous acceptons de perdre 1 dB sur le signal lu à 0.8 µm, nous obtenons d = 8.5 µm. La marge de réglage hint est alors de 5 µm. Malgré cela, pour être dans la zone de fonctionnement voulue, il faut être capable de repositionner la tête avec une précision sur l'enfoncement de 1 μm et sur l'azimut de 2' et de maintenir la bande lors de son défilement devant la partie active de la tête dans le même domaine de variation (hband<1 μm) ce qui nécessite une mécanique de précision donc coûteuse.

Nous voyons donc que dans cette géométrie réaliser un contact correct avec la bande se traduira par des coûts de fabrication du composant élevé et par une mécanique perfectionnée et cela alors même que nous tolérons une perte de 1dB sur le signal.

Selon l'invention, on prévoit donc pour relâcher les contraintes de fabrication et de positionnement de la tête de symétriser la position des couches actives par rapport aux bords du méplat (figure 10). Nous réalisons cela en collant une contre-plaque 66 de même nature que le substrat 60 sur les couches. Nous voyons sur la figure 10 que la marge de réglage hint peut être choisie de manière à rendre les contraintes pesant sur la précision du réglage de la tête par rapport à la bande et sur les tolérances de réalisation du méplat aussi faible que nécessaire. Par exemple pour un méplat de 1 500 μm, dont la surface de contact avec la bande est comprise entre 500 μm et 1 100 μm, nous obtenons une marge de réglage hint sur l'enfoncement de ± 150 μm, et cela sans perte de signal et sans que la bande ne vienne frotter sur le bord du méplat, ce qui permet également de relâcher la qualité du polissage dans cette zone (éclat non gênant).

Selon une variante de réalisation de la tête de lecture selon l'invention, on prévoit d'intercaler entre le substrat 60 et la couche magnéto-optique 11, une couche Silicium permettant d'améliorer le couplage du faisceau de lecture dans la couche magnéto-optique 11. Expérimentalement, on constate un doublement du facteur de mérite de la tête de lecture permettant d'obtenir un gain d'un facteur quatre sur le débit de lecture. Cette amélioration peut être appliquée en soi à une tête de lecture magnéto-optique indépendamment du reste de l'invention. De la même façon, l'invention pourrait être appliquée à un support magnéto-optique dans lequel la couche magnéto-optique serait réalisée sur une couche de Silicium.

Selon une autre variante, pour maximiser le facteur de mérite magnéto-optique en fonction de la dimension de l'entrefer de la tête de lecture on prévoit d'ajuster la valeur de l'indice de réfraction du matériau d'entrefer 10 en faisant varier la concentration en Azote lors de la pulvérisation permettant de caler le pic de résonance magnéto-optique sur l'épaisseur déposée. Il est ainsi possible de faire varier continûment l'indice de la couche d'entrefer entre 3,7 et 2, le matériau passant progressivement de la composition Silicium seul au Nitrure de Silicium.

## Revendications

1. Tête de lecture magnéto-optique, **caractérisée par le fait qu'**elle comporte un transducteur magnéto-optique à structure multicouches (9 à 11) à au moins une couche magnétique mince à effet magnéto-optique (11), au moins une couche en matériau non magnétique (10) et présentant un coefficient d'usure déterminé et une couche à bonne perméabilité magnétique (9) de fermeture de circuit magnétique, et **caractérisée en ce que** la couche à bonne perméabilité magnétique comprend une alternance de premières sous-couches (91, 93) en matériau magnétique à bonne perméabilité magnétique et de deuxièmes sous-couches (92, 94) en matériau présentant un coefficient d'usure sensiblement équivalent audit coefficient d'usure de la couche en matériau non magnétique (10).

2. Tête de lecture selon la revendication 1, **caractérisée en ce que** les premières sous-couches (91, 93) sont en matériau similaire à celui de la couche magnétique mince à effet magnéto-optique (11).

3. Tête de lecture selon la revendication 1, **caractérisée en ce que** les deuxièmes sous-couches (92, 94) sont en matériau similaire à celui de la couche en matériau non magnétique (10).

4. Tête de lecture selon la revendication 2, **caractérisée en ce que** la couche à effet magnéto-optique (11) est en matériau à base de Fer, de Silicium et d'Aluminium ($Fe_xSi_yAl_z$) ou à base de Fer, Tantale et Azote ($Fe_xTa_yN_z$).

5. Tête de lecture selon la revendication 3, **caractérisée en ce que** la couche en matériau non magnétique (10) est en matériau à base de Silicium et d'Azote ($Si_xN_y$).

6. Tête de lecture selon la revendication 1, **caractérisée en ce que** l'épaisseur des premières sous-couches est inférieure au diamètre des grains provenant de l'usure des matériaux de la tête de lecture ou d'un support à lire.

7. Tête de lecture selon la revendication 6, **caractérisée en ce que** l'épaisseur des premières sous-couches est comprise entre 10 et 50 nm.

8. Tête de lecture selon la revendication 7, **caractérisée en ce que** l'épaisseur des deuxièmes sous-couches est de quelques dizaines de nanomètres.

**9.** Tête de lecture selon la revendication 8, **caractérisée en ce qu'**elle comporte quelques dizaines de premières sous-couches qui alternent avec quelques dizaines de deuxièmes sous-couches.

**10.** Tête de lecture selon la revendication 1, **caractérisée en ce qu'**elle comporte une couche réflectrice (63) située entre la couche non magnétique (10) et la couches mince à effet magneto-optique (11).

**11.** Tête de lecture selon la revendication 10, **caractérisée en ce que** la couche réflectrice est en Or ou en Cuivre.

**12.** Tête de lecture selon la revendication 1, **caractérisée en ce qu'**elle comporte une couche d'un matériau de couplage optique accolée à la couche à effet magnéto-optique (11).

**13.** Tête de lecture selon la revendication 12, **caractérisée en ce que** la couche de couplage optique est en Silicium.

**14.** Tête de lecture selon la revendication 1, **caractérisée en ce que** la couche de bonne perméabilité magnétique (9) est recouverte d'une couche de protection (64) sur sa face opposée à la couche de matériau non magnétique (10).

**15.** Tête de lecture selon la revendication 14, **caractérisée en ce que** la couche de protection (64) est en $Si_xN_y$.

**16.** Tête de lecture selon l'une des revendications 1 ou 14, **caractérisée en ce qu'**elle comporte une contre-plaque (66) collée à la couche de bonne perméabilité magnétique (9) ou à la couche de protection (64).

**17.** Tête de lecture selon la revendication 16, **caractérisée en ce que** la couche à effet magnéto-optique (11) est supportée par un substrat (60), le flanc de l'empilement de couches comprenant notamment :

- un substrat (60) ;
- une couche en matériau non magnétique (10) ;
- une couche à bonne perméabilité magnétique (9) ;
- une contre-plaque (66)

constitue la face active de la tête magnétique et **en ce que** les épaisseurs de la contre-plaque (66) et du substrat (60) mesurées sur ledit flanc sont sensiblement égales.

## Patentansprüche

**1.** Magneto-optischer Lesekopf, **dadurch gekennzeichnet, daß** er einen magneto-optischen Transduktor in Mehrschichtenaufbau (9 bis 11) mit mindestens einer dünnen Magnetschicht (11) mit magneto-optischem Effekt, mit minde-stens einer Schicht (10) aus unmagnetischem Material, die einen bestimmten Abriebkoeffizient aufweist, sowie mit einer Schicht (9) hoher magnetischer Permeabilität enthält, die den Magnetkreis schließt, und **dadurch gekennzeichnet, daß** die Schicht hoher magnetischer Permeabilität abwechselnd Teilschichten erster Art (91, 93) aus einem Material hoher magnetischer Permeabilität und Teilschichten zweiter Art (92, 94) aus einem Material enthält, dessen Abriebkoeffizient im wesentlichen dem Abriebkoeffizient der Schicht (10) aus unmagnetischem Material gleicht.

**2.** Lesekopf nach Anspruch 1, **dadurch gekennzeichnet, daß** die Teilschichten erster Art (91, 93) aus einem Material ähnlich dem der dünnen Magnetschicht (11) mit magneto-optischem Effekt sind.

**3.** Lesekopf nach Anspruch 1, **dadurch gekennzeichnet, daß** die Teilschichten zweiter Art (92, 94) aus einem Material ähnlich dem der Schicht (10) aus unmagnetischem Material sind.

**4.** Lesekopf nach Anspruch 2, **dadurch gekennzeichnet, daß** die Schicht (11) mit magneto-optischem Effekt aus einem Material auf der Basis von Eisen, Silizium und Aluminium ($Fe_xSi_yAl_z$) oder auf der Basis von Eisen, Tantal und Stickstoff ($Fe_xTa_yN_z$) besteht.

**5.** Lesekopf nach Anspruch 3, **dadurch gekennzeichnet, daß** die Schicht (10) aus unmagnetischem Material aus einem Material auf der Basis von Silizium und Stickstoff ($Si_xN_y$) besteht.

6. Lesekopf nach Anspruch 1, **dadurch gekennzeichnet, daß** die Dicke der Teilschichten erster Art geringer als der Durchmesser der Staubkörner ist, die beim Abrieb der Materialien des Lesekopfs oder eines zu lesenden Trägers auftreten.

7. Lesekopf nach Anspruch 6, **dadurch gekennzeichnet, daß** die Dicke der Teilschichten erster Art zwischen 10 und 50 nm beträgt.

8. Lesekopf nach Anspruch 7, **dadurch gekennzeichnet, daß** die Dicke der Teilschichten zweiter Art einige zehn Nanometer beträgt.

9. Lesekopf nach Anspruch 8, **dadurch gekennzeichnet, daß** er einige zehn Teilschichten erster Art abwechselnd mit einigen zehn Teilschichten zweiter Art aufweist.

10. Lesekopf nach Anspruch 1, **dadurch gekennzeichnet, daß** er eine reflektierende Schicht (63) aufweist, die zwischen der unmagnetischen Schicht (10) und der dünnen Magnetschicht mit magneto-optischem Effekt (11) liegt.

11. Lesekopf nach Anspruch 10, **dadurch gekennzeichnet, daß** die reflektierende Schicht aus Gold oder Kupfer ist.

12. Lesekopf nach Anspruch 1, **dadurch gekennzeichnet, daß** er eine Schicht aus einem optischen Koppelmaterial besitzt, die auf die Schicht mit magneto-optischem Effekt aufgeklebt ist.

13. Lesekopf nach Anspruch 12, **dadurch gekennzeichnet, daß** die optische Koppelschicht aus Silizium ist.

14. Lesekopf nach Anspruch 1, **dadurch gekennzeichnet, daß** die Schicht (9) hoher magnetischer Permeabilität von einer Schutzschicht (64) an der Seite bedeckt ist, die der Schicht (10) aus unmagnetischem Material entgegengesetzt ist.

15. Lesekopf nach Anspruch 14, **dadurch gekennzeichnet, daß** die Schutzschicht (64) aus $Si_xN_y$ ist.

16. Lesekopf nach einem der Ansprüche 1 oder 14, **dadurch gekennzeichnet, daß** er eine Gegenplatte (66) enthält, die auf die Schicht (9) hoher magnetischer Permeabilität oder auf die Schutzschicht (64) aufgeklebt ist.

17. Lesekopf nach Anspruch 16, **dadurch gekennzeichnet, daß** die Schicht (11) mit magneto-optischem Effekt von einem Substrat (60) getragen wird, wobei die Flanke des Stapels von Schichten, die insbesondere

- ein Substrat (60),
- eine Schicht aus unmagnetischem Material (10),
- eine Schicht hoher magnetischer Permeabilität (9),
- eine Gegenplatte (66)

enthält, die aktive Seite des Magnetkopfs bildet und daß die Dicken der Gegenplatte (66) und des Substrats (60), gemessen. an dieser Flanke, einander im wesentlichen gleichen.

**Claims**

1. Magnetooptic read head, **characterized by** the fact that it comprises a magnetooptic transducer with a multilayer structure (9 to 11) with at least one thin magnetic layer with a magnetooptic effect (11), at least one layer of a nonmagnetic material (10) having a predetermined wear coefficient and a layer with good magnetic permeability (9) for closing a magnetic circuit, and **characterized in that** the layer with good magnetic permeability comprises alternating first sublayers (91, 93) made of a magnetic material with good magnetic permeability and second sublayers (92, 94) made of a material having a wear coefficient substantially equivalent to the said wear coefficient of the layer made of a nonmagnetic material (10).

2. Read head according to Claim 1, **characterized in that** the first sublayers (91, 93) are made of a material similar to that of the thin magnetic layer with a magnetooptic effect (11).

3. Read head according to Claim 1, **characterized in that** the second sublayers (92, 94) are made of a material similar to that of the layer made of a nonmagnetic material (10).

4. Read head according to Claim 2, **characterized in that** the layer with a magnetooptic effect (11) is made of a material based on iron, silicon and aluminum ($Fe_xSi_yAl_z$) or based on iron, tantalum and nitrogen ($Fe_xTa_yN_z$).

5. Read head according to Claim 3, **characterized in that** the layer made of a nonmagnetic material (10) is made of a material based on silicon and nitrogen ($Si_xN_y$).

6. Read head according to Claim 1, **characterized in that** the thickness of the first sublayers is less than the diameter of the particles coming from wear of the materials of the read head or of a medium to be read.

7. Read head according to Claim 6, **characterized in that** the thickness of the first sublayers is between 10 and 50 nm.

8. Read head according to Claim 7, **characterized in that** the thickness of the second sublayers is a few tens of nanometers.

9. Read head according to Claim 8, **characterized in that** it comprises a few tens of first sublayers which alternate with a few tens of second sublayers.

10. Read head according to Claim 1, **characterized in that** it comprises a reflecting layer (63) located between the nonmagnetic layer (10) and the thin magnetic layer with a magnetooptic effect (11).

11. Read head according to Claim 10, **characterized in that** the reflecting layer is made of gold or of copper.

12. Read head according to Claim 1, **characterized in that** it comprises a layer of an optical coupling material placed against the layer with a magnetooptic effect (11).

13. Read head according to Claim 12, **characterized in that** the optical coupling layer is made of silicon.

14. Read head according to Claim 1, **characterized in that** the layer of good magnetic permeability (9) is coated with a protective layer (64) on its face which faces away from the layer of a nonmagnetic material (10).

15. Read head according to Claim 14, **characterized in that** the protective layer (64) is made of $Si_xN_y$.

16. Read head according to either of Claims 1 and 14, **characterized in that** it comprises a backplate (66) adhesively bonded to the layer of good magnetic permeability (9) or to the protective layer (64).

17. Read head according to Claim 16, **characterized in that** the layer with a magnetooptic effect (11) is supported by a substrate (60), the sidewall of a stack of layers especially comprising:

- a substrate (60);
- a layer of a nonmagnetic material (10);
- a layer with good magnetic permeability (9);
- a backplate (66)

forms the active face of the magnetic head and **in that** the thicknesses of the backplate (66) and of the substrate (60) measured on the said sidewall are substantially equal.

FIG.1

FIG.2

FIG.3

FIG.4a

FIG.4b

FIG.5

FIG.6

FIG.7a

66
65
ADHÉSIF
64
≃ 30 × [SENDUST (300 Å)/Si₃N₄ (200 Å)]
OU 1 × SENDUST (9000 Å)
63
SENDUST (25 Å)
62
ADHÉSIF
11
Al₂O₃ (25 Å)
ADHÉSIF
61
60
9
Cu OU Au
(500 Å)
10
$Si_xN_y$ (n=3,7 à 2)

FIG. 7b

FIG.8a

FIG.8b

FIG.8c

EP 1 206 773 B1

ENFONCEMENT INSUFFISANT (1) = Cd1

Cd2

Cd1

14

ENFONCEMENT TROP IMPORTANT (2) = Cd2

FIG.9a

14

$C_2$

$Z$

$C_1$

TÊTE INSUFFISAMMENT ENFONCÉE

FIG.9b

11  10  9

14

60

66

FIG.10

2hint

C1

C1

14

C2

C2

hmed

LIMITE SUPÉRIEURE D'ENFONCEMENT

TÊTE NON ENFONCÉE

LIMITE INFÉRIEURE D'ENFONCEMENT

FIG.11

18